# EUROPEAN PATENT SPECIFICATION

(11) **EP 3 888 943 B1**
(45) Date of publication and mention of the grant of the patent: **11.12.2024**
(21) Application number: 21164563.5
(22) Date of filing: 24.03.2021
(51) Int. Cl.: B60C 9/22, B60C 13/00, B60C 15/06

(54) **PNEUMATIC TIRE**
LUFTREIFEN
PNEUMATIQUE

(30) Priority: 02.04.2020 JP 2020066927
(43) Date of publication of application: 06.10.2021
(73) Proprietor: Sumitomo Rubber Industries, Ltd., Kobe-shi, Hyogo-ken (JP)
(72) Inventor: YOSHIZUMI, Takuma, Kobe-shi, Hyogo 651-0072 (JP)
(74) Representative: Manitz Finsterwald Patent- und Rechtsanwaltspartnerschaft mbB

(56) References cited:
- EP-A1- 0 661 179
- EP-A1- 1 396 355
- EP-A1- 1 500 526
- EP-A1- 3 482 976
- EP-A2- 1 203 672
- EP-A2- 1 310 385
- JP-A- 2002 178 724
- JP-A- 2005 162 106
- US-A1- 2010 230 020

## Description

### BACKGROUND OF THE INVENTION

### Field of the Invention

The present invention relates to a pneumatic tire.

### Description of the Background Art

Conventionally, pneumatic tires including, as tread reinforcement layers, a belt layer and a band layer disposed outward of the belt layer in a tire radial direction have been known (see, for example, Japanese Laid-Open Patent Publication No. 2016-101803).

Japanese Laid-Open Patent Publication No. 2016-101803 indicates that the band layer contributes to improvement in steering stability and road noise performance while exhibiting excellent fuel efficiency.

A pneumatic tire in accordance with the preamble of claim 1 is known from EP 1 500 526 A1, EP 1 396 355 A1, EP 1 203 672 A2 and JP 2005 162106 A. Related tires are known from US 2010/230020 A, EP 0 661 179 A1, EP 1 310 385 A2, JP 2002 178724 A, and EP 3 482 976 A1.

However, achievement of both high-speed durability and ride comfort of a pneumatic tire has been demanded in recent years.

### SUMMARY OF THE INVENTION

The present invention has been made in view of the above circumstances, and a main object of the present invention is to provide a pneumatic tire in which achievement of high-speed durability, steering stability and ride comfort can be easily realized.

The present invention is directed to a pneumatic tire including: a tread portion; a pair of sidewall portions; a pair of bead portions in each of which a bead core is embedded; a carcass layer extending between the pair of bead portions so as to straddle each bead core; a belt layer disposed outward of the carcass layer in a tire radial direction; and a band layer disposed outward of the belt layer in the tire radial direction. The band layer includes a band cord arranged in a tire circumferential direction. A 2% modulus of the band cord is 4500 to 9000 N/mm².

In the pneumatic tire according to the present invention, it is preferable that the 2% modulus of the band cord is not less than 7000 N/mm².

In the pneumatic tire according to the present invention, it is preferable that each sidewall portion has a sidewall rubber disposed outward of the carcass layer in a tire axial direction, and a complex elastic modulus E*1 of the sidewall rubber is 3.0 to 4.5 MPa.

In the pneumatic tire according to the present invention, it is preferable that the band cord contains aramid fiber.

In the pneumatic tire according to the present invention, the pair of bead portions have bead apex rubbers each disposed outward of the corresponding bead core in the tire radial direction, and a complex elastic modulus E*2 of each bead apex rubber is 20 to 80 MPa.

In the pneumatic tire according to the present invention, it is preferable that a distance in the tire radial direction from a bead base line to an outer end in the tire radial direction of each bead apex rubber is 25 to 45% of a tire cross-sectional height.

In the pneumatic tire of the present invention, since the band layer contains the band cord arranged in the tire circumferential direction and the 2% modulus of the band cord is not less than 4500 N/mm², the expansion of the tread portion during high-speed running is inhibited, whereby high-speed durability is easily improved. Meanwhile, since the 2% modulus of the band cord is not greater than 9000 N/mm², the flexibility of the tread portion is ensured, whereby ride comfort is improved. Consequently, achievement of both the high-speed durability and the ride comfort can be easily realized.

### BRIEF DESCRIPTION OF THE DRAWINGS

FIG. 1 is a meridian cross-sectional view of a pneumatic tire according to an embodiment of the present invention;
FIG. 2 is a cross-sectional view of one side, relative to a tire equator, of the pneumatic tire in FIG. 1; and
FIG. 3 is a perspective view of a band ply in FIG. 2.

### DESCRIPTION OF THE PREFERRED EMBODIMENTS

Hereinafter, an embodiment of the present invention will be described with reference to the drawings.

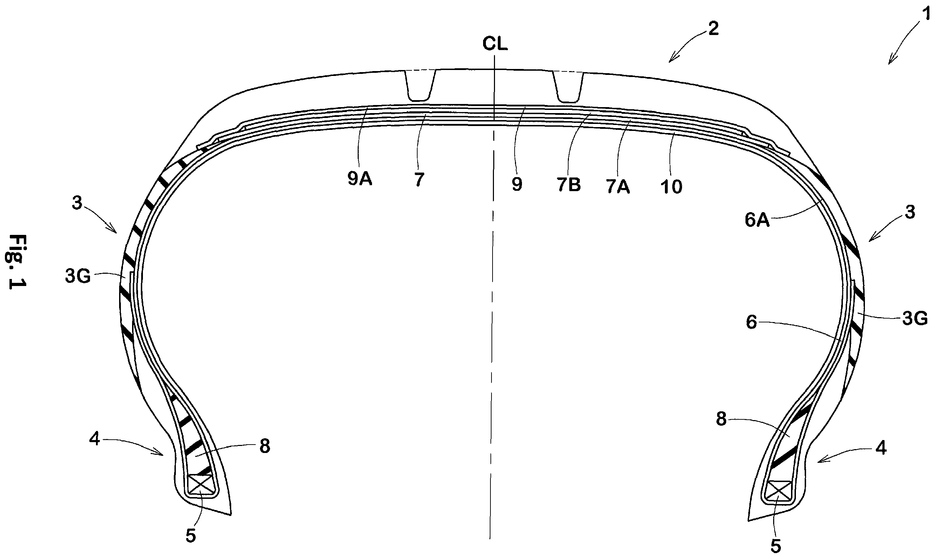

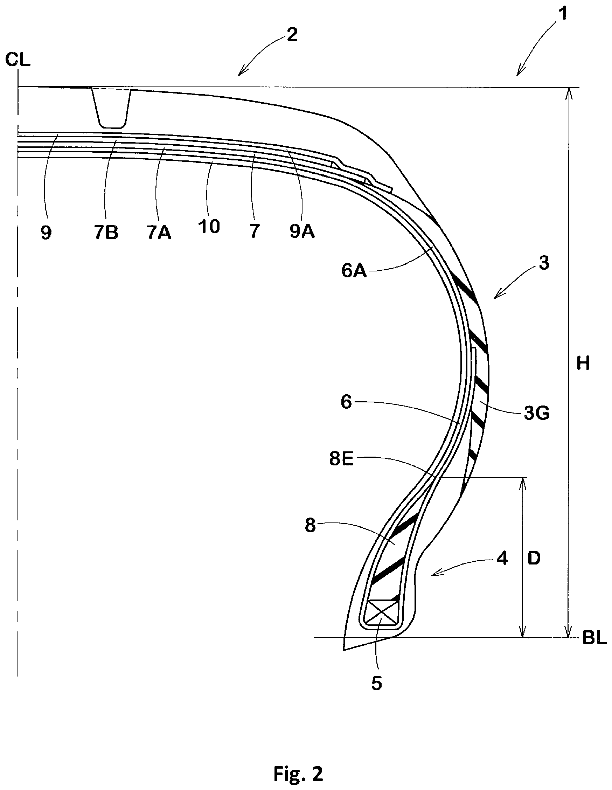

FIG. 1 is a meridian cross-sectional view of a pneumatic tire 1 according to this embodiment in a normal state, including a rotational axis (not shown) of the tire. FIG. 2 shows a cross section of one side, relative to a tire equator CL, of the pneumatic tire in FIG. 1.

The "normal state" is a state where: the pneumatic tire 1 is mounted to a normal rim and inflated to a normal internal pressure; and no load is applied to the pneumatic tire 1. Hereinafter, the dimensions of components of the pneumatic tire 1 and the like are values measured in the normal state, unless otherwise specified.

The "normal rim" is a rim that is defined, in a standard system including a standard on which the pneumatic tire 1 is based, by the standard for each tire, and is, for example, the "Standard Rim" in the JATMA standard, the "Design Rim" in the TRA standard, or "Measuring Rim" in the ETRTO standard.

The "normal internal pressure" is an air pressure that is defined, in a standard system including a standard on which the pneumatic tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In the case where the pneumatic tire 1 is for passenger cars, the normal internal pressure may be, for example, 180 kPa.

In cases of tires such as racing tires to which no standards are applicable, a rim and an air pressure recommended by the manufacturer are used as the normal rim and the normal internal pressure.

The pneumatic tire 1 includes a tread portion 2, a pair of sidewall portions 3, a pair of bead portions 4, a carcass layer 6, a belt layer 7, and a band layer 9.

A bead core 5 is embedded in each of the pair of bead portions 4. The bead core 5 is formed in, for example, a polygonal cross-sectional shape in which a bead wire (not shown) made of steel is wound in multiple rows and multiple stages.

The carcass layer 6 extends between the pair of bead portions 4 so as to straddle each bead core 5. The carcass layer 6 has at least one carcass ply 6A. The carcass ply 6A is formed by, for example, coating an array of carcass cords with topping rubber. As each of the carcass cords, for example, an organic fiber such as polyester fiber, nylon fiber, rayon fiber, polyethylene naphthalate fiber, or aramid fiber, or steel, is used.

In the tread portion 2, the belt layer 7 is disposed outward of the carcass layer 6 in a tire radial direction. The belt layer 7 is made of at least one belt ply. In this embodiment, the belt layer 7 is made of two belt plies 7A and 7B respectively on an inner side and an outer side in the tire radial direction. The belt plies 7A and 7B are each formed by, for example, coating an array of belt cords with topping rubber. Each of the belt cords of the belt plies 7A and 7B is preferably a highly elastic cord such as a steel cord.

In the tread portion 2, the band layer 9 is disposed outward of the belt layer 7 in the tire radial direction. The band layer 9 is made of at least one band ply 9A in which band cords are arranged at a small angle, e.g., not greater than 10 degrees, with respect to a tire circumferential direction. The band ply 9A may be obtained by splicing either a jointless band or ply that is formed by helically winding a band cord or a ribbon-shaped band-like ply.

Note that an inner liner layer 10 is formed on the inner side of the carcass layer 6, i.e., a tire inner cavity surface. The inner liner layer 10 is made of air-impermeable rubber and maintains internal pressure.

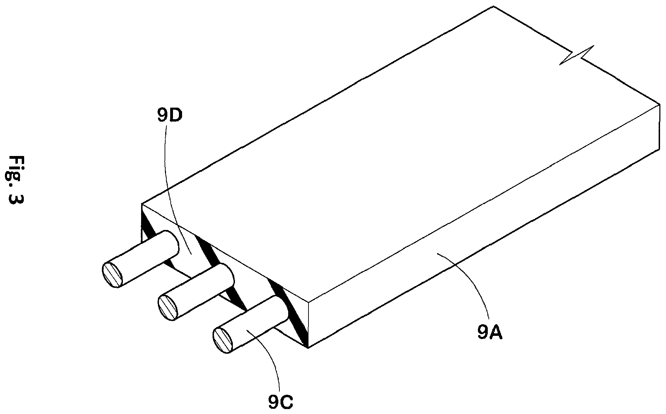

FIG. 3 shows a configuration of the band ply 9A. The band ply 9A includes band cords 9C. The band cords 9C are arranged in the tire circumferential direction. The band cords 9C are coated with topping rubber 9D.

As a material for each of the band cords, for example, an organic fiber such as nylon (nylon 66) fiber, polyester (polyethylene terephthalate or polyethylene naphthalate) fiber, or aramid fiber, is used.

A 2% modulus of each band cord 9C of this embodiment is 4500 to 9000 N/mm².

Here, the "2% modulus" means a tensile elastic modulus, at an elongation of 2%, that is measured at a tensile speed of 30 ± 2 cm/min., in accordance with the Tensile Strength And Elongation Tests (Section 8.5) described in the Test Methods for Chemical Fiber Tire Cords of JIS L1017. That is, the "2% modulus" is a value obtained by dividing the slope of a stress-strain curve by the cross-sectional area of the cord.

If the 2% modulus of the band cord 9C is not less than 4500 N/mm², the expansion of the tread portion 2 during high-speed running is inhibited, whereby high-speed durability is easily improved. Meanwhile, if the 2% modulus of the band cord 9C is not greater than 9000 N/mm², the flexibility of the tread portion 2 is ensured and impact received from a road surface or the like is absorbed by the tread portion 2, whereby ride comfort is improved. Consequently, achievement of both the high-speed durability and the ride comfort can be easily realized.

From the viewpoint of further improving the high-speed durability, the 2% modulus of the band cord 9C is preferably not less than 7000 N/mm². Such a band cord 9C can be easily implemented by, for example, a cord that contains aramid fiber. In particular, a band cord 9C having a hybrid structure obtained by combination of aramid fiber and nylon fiber contributes to achievement of both the high-speed durability and the ride comfort.

As shown in FIGS. 1 and 2, a sidewall rubber 3G is disposed in the sidewall portion 3. The sidewall rubber 3G is disposed outward of the carcass layer 6 in a tire axial direction.

A complex elastic modulus E*1 of the sidewall rubber 3G is preferably 3.0 to 4.5 MPa.

The complex elastic modulus of rubber in the present application is a value measured in accordance with the standard of JIS-K6394 using, for example, a dynamic viscoelasticity measurement device (EPLEXOR series) manufactured by NETZSCH-Gerätebau GmbH, under the conditions indicated below.
Initial strain: 10%
Amplitude: ±1%
Frequency: 10 Hz
Deformation mode: tension
Measurement temperature: 70°C

If the complex elastic modulus E*1 of the sidewall rubber 3G is not less than 3.0 MPa, the stiffness of the sidewall portion 3 is improved, whereby steering stability is improved. Meanwhile, if the complex elastic modulus E*1 of the sidewall rubber 3G is not greater than 4.5 MPa, the flexibility of the sidewall portion 3 is ensured and impact received from the road surface or the like is absorbed by the sidewall portion 3, whereby the ride comfort is improved.

The bead portions 4 have bead apex rubbers 8. Each bead apex rubber 8 is disposed outward of the corresponding bead core 5 in the tire radial direction. The bead apex rubber 8 is formed in a substantially triangular cross-sectional shape that is tapered toward the outer side in the tire radial direction.

A complex elastic modulus E*2 of the bead apex rubber 8 is 20 to 80 MPa. If the complex elastic modulus E*2 of the bead apex rubber 8 is not less than 20 MPa, the stiffness of the bead portion 4 is improved, whereby the steering stability is improved. Meanwhile, if the complex elastic modulus E*2 of the bead apex rubber 8 is not greater than 80 MPa, the flexibility of the bead portion 4 is ensured and impact received from the road surface or the like is absorbed by the bead portion 4, whereby the ride comfort is improved.

A distance D in the tire radial direction from a bead base line BL to an outer end 8E in tire radial direction of the bead apex rubber 8 is preferably 25 to 45% of a tire cross-sectional height H. If the distance D is not less than 25% of the tire cross-sectional height H, the stiffness of the bead portion 4 is improved, whereby the steering stability is improved. Meanwhile, if the distance D is not greater than 45% of the tire cross-sectional height H, the flexibility of the bead portion 4 is ensured, whereby the ride comfort is improved.

Although the pneumatic tire 1 of the present invention has been described above in detail, the present invention is not limited to the above specific embodiment but only by the appended claims.

### EXAMPLES

Pneumatic tires with a size of 195/65R15 having the basic structure in FIG. 1 were produced as test tires according to the specifications described in Table 1 and evaluated for the high-speed durability and the ride comfort. The 2% modulus of the band cord was adjusted by changing the fineness (dtex) and number of twists of each of cord materials (nylon 66, polyethylene terephthalate, and aramid). Note that the number of cords per 5 cm in each type of cord was 49. Out of specifications of the test tires, specifications that are not indicated in Table 1 are common. The test method is as follows.

### <High-Speed Durability>

Each test tire was mounted on a rim (15 × 6.0 J) and was run using a drum test machine under the conditions of an internal pressure of 300 kPa, a load of 4.4 kN, and a speed of 270 km/h. The run time taken until damage occurred was measured. The results are indicated by indexes, with the run time of Comparative Example 1 being regarded as 100. A greater value indicates better high-speed durability.

### <Ride Comfort>

The test tires mounted on the above rims were attached to all the wheels of a vehicle having an engine displacement of 1800 cc, under the condition of an internal pressure of 240 kPa. Then, a test driver drove the vehicle on a test course having a dry asphalt road surface. At that time, sensory evaluation was made by the test driver in terms of ride comfort. The results are indicated by indexes, with the score of Comparative Example 1 being regarded as 100. A greater value indicates better ride comfort.

The test results are indicated in Table 1. Note that, for example, the values indicative of the performances are summed for each example, whereby the overall performance of the example can be determined (the same applies to Table 2 and the following tables).

**[Table 1]**

| | Comparative Example 1 | Comparative Example 2 | Comparative Example 3 | Comparative Example 4 |
|---|---|---|---|---|
| Material for band cord | N66 | N66 | PET | PET |
| 2% modulus (N/mm²) | 3570 | 2420 | 2300 | 9900 |
| High-speed durability (index) | 100 | 98 | 95 | 115 |
| Ride comfort (index) | 100 | 100 | 100 | 85 |

| | Example 1 | Example 2 | Example 3 |
|---|---|---|---|
| Material for band cord | PET | PET | Aramid + N66 |
| 2% modulus (N/mm²) | 4500 | 7100 | 9000 |
| High-speed durability (index) | 109 | 110 | 115 |
| Ride comfort (index) | 100 | 98 | 95 |

As is obvious from Table 1, it has been confirmed that in the pneumatic tires of the examples, achievement of both the high-speed durability and the ride comfort is made in a well-balanced manner as compared to the comparative examples.

Pneumatic tires with a size of 195/65R15 having the basic structure in FIG. 1 were produced as test tires according to the specifications in Table 2 and evaluated for the high-speed durability, the ride comfort, and the steering stability. Out of the specifications of the test tires, specifications that are not indicated in Table 2 are common. The test method is as follows.

### <High-Speed Durability>

The run time of each test tire was measured in the same manner as that described above. The results are indicated by indexes, with the run time of Example 6 being regarded as 100. A greater value indicates better high-speed durability.

### <Ride Comfort>

A test driver drove the above vehicle on the test course having the dry asphalt road surface. At that time, sensory evaluation was made by the test driver in terms of ride comfort. The results are indicated by scores, with the score of Example 6 being regarded as 100. A greater value indicates better ride comfort.

### <Steering Stability>

A test driver drove the above vehicle on the test course having the dry asphalt road surface. At that time, sensory evaluation was made by the test driver in terms of steering stability. The results are indicated by scores, with the score of Example 6 being regarded as 100. A greater value indicates better steering stability.

The test results are indicated in Table 2.

**[Table 2]**

| | Example 4 | Example 5 | Example 6 | Example 7 | Example 8 |
|---|---|---|---|---|---|
| Material for band cord | PET | PET | PET | PET | PET |
| 2% modulus (N/mm²) | 7100 | 7100 | 7100 | 7100 | 7100 |
| Formula of sidewall rubber | Formula A | Formula B | Formula C | Formula D | Formula E |
| E*1 (MPa) | 2.5 | 3.0 | 3.5 | 4.5 | 5.5 |
| High-speed durability (index) | 100 | 100 | 100 | 100 | 100 |
| Ride comfort (index) | 110 | 105 | 100 | 95 | 85 |
| Steering stability (index) | 90 | 95 | 100 | 105 | 110 |

Note that the formulas (PHR) and the complex elastic moduli E* of sidewall rubbers used in the test are as indicated in Table 3.

**[Table 3]**

| | Formula A | Formula B | Formula C | Formula D | Formula E |
|---|---|---|---|---|---|
| Natural rubber | 50 | 50 | 50 | 50 | 50 |
| Butadiene rubber | 50 | 50 | 50 | 50 | 50 |
| Carbon black | 35 | 40 | 50 | 50 | 60 |
| Wax | 1 | 1 | 1 | 1 | 1 |
| Antioxidant 6C | 2 | 2 | 2 | 2 | 2 |
| Antioxidant RD | 1 | 1 | 1 | 1 | 1 |
| Process oil | 5 | 5 | 10 | 5 | 5 |
| Stearic acid | 2 | 2 | 2 | 2 | 2 |
| Zinc oxide | 3 | 3 | 3 | 3 | 3 |
| 5% oil sulfur | 1.2 | 1.2 | 1.2 | 1.5 | 1.5 |
| Vulcanization accelerator NS | 0.7 | 0.7 | 0.7 | 0.75 | 0.75 |
| E*1 (MPa) | 2.5 | 3.0 | 3.5 | 4.5 | 5.5 |

The details of each formula are as follows.
Natural rubber (NR): RSS#1
Butadiene rubber (BR): BR150B manufactured by Ube Industries, Ltd.
Carbon: SHOBLACK N550 manufactured by Cabot Japan K.K.
Wax: SUNNOC WAX manufactured by Ouchi Shinko Chemical Industrial Co., Ltd.
Antioxidant 6C: ANTIGEN 6C (N-(1,3-dimethylbutyl)-N'-phenyl-p-phenylenediamine) manufactured by Sumitomo Chemical Co., Ltd.
Antioxidant RD: NOCRAC 224 manufactured by Ouchi Shinko Chemical Industrial Co., Ltd.
Process oil: mineral oil PW-380 manufactured by Idemitsu Kosan Co., Ltd.
Stearic acid: Tsubaki manufactured by NOF Corporation
Zinc oxide: Zinc Oxide Type-1 manufactured by Mitsui Mining & Smelting Co., Ltd.
5% sulfur: powdery sulfur manufactured by Karuizawa Sulfur Co, Ltd.
Vulcanization accelerator: NOCCELER NS (N-tert-butyl-2-benzothiazolylsulfenamide) manufactured by Ouchi Shinko Chemical Industrial Co., Ltd.

Pneumatic tires with a size of 195/65R15 having the basic structure in FIG. 1 were produced as test tires according to the specifications in Table 4 and evaluated for the high-speed durability, the ride comfort, and the steering stability. Out of the specifications of the test tires, specifications that are not indicated in Table 4 are common. The test method is as follows.

### <High-Speed Durability>

The run time of each test tire was measured in the same manner as that described above. The results are indicated by indexes, with the run time of Example 11 being regarded as 100. A greater value indicates better high-speed durability.

### <Ride Comfort>

A test driver drove the above vehicle on the test course having the dry asphalt road surface. At that time, sensory evaluation was made by the test driver in terms of ride comfort. The results are indicated by scores, with the score of Example 11 being regarded as 100. A greater value indicates better ride comfort.

### <Steering Stability>

A test driver drove the vehicle on the test course having the dry asphalt road surface. At that time, sensory evaluation was made by the test driver in terms of steering stability. The results are indicated by scores, with the score of Example 11 being regarded as 100. A greater value indicates better steering stability.

The test results are indicated in Table 4.

**[Table 4]**

| | Example 9 | Example 10 | Example 11 | Example 12 | Example 13 |
|---|---|---|---|---|---|
| Material for band cord | PET | PET | PET | PET | PET |
| 2% modulus (N/mm²) | 7100 | 7100 | 7100 | 7100 | 7100 |
| E*2 (MPa) | 10 | 20 | 50 | 80 | 100 |
| High-speed durability (index) | 100 | 100 | 100 | 100 | 100 |
| Ride comfort (index) | 110 | 105 | 100 | 95 | 85 |
| Steering stability (index) | 85 | 95 | 100 | 105 | 110 |

Pneumatic tires with a size of 195/65R15 having the basic structure in FIG. 1 were produced as test tires according to the specifications in Table 5 and evaluated for the high-speed durability, the ride comfort, and the steering stability. Out of the specifications of the test tires, specifications that are not indicated in Table 5 are common. The test method is as follows.

### <High-Speed Durability>

The run time of each test tire was measured in the same manner as that described above. The results are indicated by indexes, with the run time of Example 16 being regarded as 100. A greater value indicates better high-speed durability.

### <Ride Comfort>

A test driver drove the above vehicle on the test course having the dry asphalt road surface. At that time, sensory evaluation was made by the test driver in terms of ride comfort. The results are indicated by scores, with the score of Example 16 being regarded as 100. A greater value indicates better ride comfort.

### <Steering Stability>

A test driver drove the above vehicle on the test course having the dry asphalt road surface. At that time, sensory evaluation was made by the test driver in terms of steering stability. The results are indicated by scores, with the score of Example 16 being regarded as 100. A greater value indicates better steering stability.

The test results are shown in Table 5.

**[Table 5]**

| | Example 14 | Example 15 | Example 16 | Example 17 | Example 18 |
|---|---|---|---|---|---|
| Material for band cord | PET | PET | PET | PET | PET |
| 2% modulus (N/mm²) | 7100 | 7100 | 7100 | 7100 | 7100 |
| D/H (%) | 15 | 25 | 35 | 45 | 55 |
| High-speed durability (index) | 100 | 100 | 100 | 100 | 100 |
| Ride comfort (index) | 110 | 105 | 100 | 95 | 85 |
| Steering stability (index) | 85 | 95 | 100 | 105 | 110 |

### REFERENCE SIGNS LIST

1. pneumatic tire
2. tread portion
3. sidewall portion
3G. sidewall rubber
4. bead portion
5. bead core
6. carcass layer
7. belt layer
8. bead apex rubber
9. band layer
9C. band cord
BL. bead base line
D. distance in the tire radial direction (from a bead base line (BL) to an outer end (8E))
H. tire cross-sectional height

## Claims

1. A pneumatic tire (1) comprising:
a tread portion (2);
a pair of sidewall portions (3);
a pair of bead portions (4) in each of which a bead core (5) is embedded;
a carcass layer (6) extending between the pair of bead portions (4) so as to straddle each bead core (5);
a belt layer (7) disposed outward of the carcass layer (6) in a tire radial direction; and
a band layer (9) disposed outward of the belt layer (7) in the tire radial direction, wherein
the pair of bead portions (4) have bead apex rubbers (8) each disposed outward of the corresponding bead core (5) in the tire radial direction
the band layer (9) includes a band cord (9C) arranged in a tire circumferential direction, and
a 2% modulus of the band cord (9C) is 4500 to 9000 N/mm², wherein the 2% modulus is a tensile elastic modulus, at an elongation of 2%, that is measured at a tensile speed of 30 ± 2 cm/min,
**characterized in that**
a complex elastic modulus (E*2) of each bead apex rubber (8) is 20 to 80 MPa, wherein the complex elastic modulus is measured in accordance with the standard of JIS-K6394 under the conditions of initial strain being 10%, amplitude being ±1%, frequency being 10 Hz, deformation mode being tension and measurement temperature being 70°C.

2. The pneumatic tire (1) according to claim 1, wherein
the 2% modulus of the band cord (9C) is not less than 7000 N/mm².

3. The pneumatic tire (1) according to claim 1 or 2, wherein
each sidewall portion (3) has a sidewall rubber (3G) disposed outward of the carcass layer (6) in a tire axial direction, and
a complex elastic modulus (E* 1) of the sidewall rubber (3G) is 3.0 to 4.5 MPa.

4. The pneumatic tire (1) according to any of one claims 1 to 3, wherein the band cord (9C) contains aramid fiber.

5. The pneumatic tire (1) according to any one of claims 1 to 4, wherein
a distance (D) in the tire radial direction from a bead base line (BL) to an outer end (8E) in the tire radial direction of each bead apex rubber (8) is 25 to 45% of a tire cross-sectional height (H).

## Patentansprüche

1. Luftreifen (1), umfassend:
einen Laufflächenabschnitt (2);
ein Paar Seitenwandabschnitte (3);
ein Paar Wulstabschnitte (4), in die jeweils ein Wulstkern (5) eingebettet ist;
eine Karkassschicht (6), die sich zwischen dem Paar Wulstabschnitte (4) erstreckt, so dass sie jeden Wulstkern (5) überspannt;
eine Gürtelschicht (7), die in einer Reifenradialrichtung außen von der Karkassschicht (6) angeordnet ist; und
eine Bandschicht (9), die in der Reifenradialrichtung außen von der Gürtelschicht (7) angeordnet ist, wobei
das Paar Wulstabschnitte (4) Wulstkernreitergummis (8) aufweist, die jeweils in der Reifenradialrichtung außen von dem entsprechenden Wulstkern (5) angeordnet sind,
die Bandschicht (9) einen Bandkord (9C) umfasst, der in einer Reifenumfangsrichtung angeordnet ist, und
ein 2%-Modul des Bandkords (9C) 4500 bis 9000 N/mm² beträgt, wobei der 2%-Modul ein Zugelastizitätsmodul bei einer Dehnung von 2% ist, der bei einer Zuggeschwindigkeit von 30 ± 2 cm/min gemessen wird,
**dadurch gekennzeichnet, dass**
ein komplexer Elastizitätsmodul (E*2) jedes Wulstkernreitergummis (8) 20 bis 80 MPa beträgt, wobei der komplexe Elastizitätsmodul gemäß dem Standard von JIS-K6394 unter den Bedingungen einer Anfangsdehnung von 10%, einer Amplitude von ±1%, einer Frequenz von 10 Hz, eines Verformungsmodus, bei dem es sich um eine Spannung handelt, und einer Messtemperatur von 70°C gemessen wird.

2. Luftreifen (1) nach Anspruch 1, wobei
der 2%-Modul des Bandkords (9C) nicht weniger als 7000 N/mm² beträgt.

3. Luftreifen (1) nach Anspruch 1 oder 2, wobei
jeder Seitenwandabschnitt (3) einen Seitenwandgummi (3G) aufweist, der in einer Reifenaxialrichtung außen von der Karkassschicht (6) angeordnet ist, und
ein komplexer Elastizitätsmodul (E*1) des Seitenwandgummis (3G) 3,0 bis 4,5 MPa beträgt.

4. Luftreifen (1) nach einem der Ansprüche 1 bis 3, wobei der Bandkord (9C) Aramidfaser enthält.

5. Luftreifen (1) nach einem der Ansprüche 1 bis 4, wobei
ein Abstand (D) in der Reifenradialrichtung von einer Wulstbasislinie (BL) zu einem äußeren Ende (8E) in der Reifenradialrichtung jedes Wulstkernreitergummis (8) 25 bis 45 % einer Reifenquerschnittshöhe (H) beträgt.

## Revendications

1. Bandage pneumatique (1) comprenant :
une portion formant bande de roulement (2) ;
une paire de portions formant parois latérales (3) ;
une paire de portions de talon (4) dans chacune desquelles une âme de talon (5) est enchâssée ;
une couche de carcasse (6) s'étendant entre la paire de portions de talon (4) de manière à enjamber chaque âme de talon (5) ;
une couche de ceinture (7) disposée à l'extérieur de la couche de carcasse (6) dans une direction radiale du pneumatique ; et
une couche de bande (9) disposée à l'extérieur de la couche de ceinture (7) dans la direction radiale du pneumatique, dans lequel
la paire de portions de talon (4) ont des caoutchoucs de sommet de talon (8) disposés chacun à l'extérieur de l'âme de talon correspondante (5) dans la direction radiale du pneumatique,
la couche de bande (9) inclut un câblé de bande (9C) agencé dans une direction circonférentielle du pneumatique, et
un module de 2 % du câblé de bande (9C) est de 4 500 à 9 000 N/mm², le module de 2 % étant un module d'élasticité en traction, à un allongement de 2 %, qui est mesuré à une vitesse de traction de 30 ± 2 cm/min,
**caractérisé en ce que**
un module d'élasticité complexe (E*2) de chaque caoutchouc de sommet de talon (8) est de 20 à 80 MPa, le module d'élasticité complexe étant mesuré en accord avec le standard de la norme industrielle japonaise JIS-K6394 sous les conditions d'une contrainte initiale de 10 %, d'une amplitude de ± 1 %, d'une fréquence de 10 Hz, d'un mode de déformation en traction et d'une température de mesurage de 70 °C.

2. Bandage pneumatique (1) selon la revendication 1, dans lequel le module de 2 % du câblé de bande (9C) n'est pas inférieur à 7 000 N/mm^{2.}

3. Bandage pneumatique (1) selon la revendication 1 ou 2, dans lequel chaque portion formant paroi latérale (3) a un caoutchouc de paroi latérale (3G) disposé à l'extérieur de la couche de carcasse (6) dans une direction axiale du pneumatique, et
un module d'élasticité complexe (E*1) du caoutchouc de paroi latérale (3G) est de 3,0 à 4,5 MPa.

4. Bandage pneumatique (1) selon l'une quelconque des revendications 1 à 3, dans lequel
le câblé de bande (9C) contient une fibre d'aramide.

5. Bandage pneumatique (1) selon l'une quelconque des revendications 1 à 4, dans lequel
une distance (D) dans la direction radiale du pneumatique depuis une ligne de base de talon (BL) jusqu'à une extrémité extérieure (8E) dans la direction radiale du pneumatique de chaque caoutchouc de sommet de talon (8) est de 25 à 45 % d'une hauteur de section transversale du pneumatique (H).
